# FASCICULE DE BREVET EUROPEEN

(11) **EP 4 386 990 B1**
(45) Date de publication et mention de la délivrance du brevet: **22.01.2025**
(21) Numéro de dépôt: 23217008.4
(22) Date de dépôt: 15.12.2023
(51) Int. Cl.: H01Q 9/42, H01Q 5/371, H01Q 1/22, H01Q 3/24, G01F 15/14, G01F 15/06, G01D 4/00

(54) **ANTENNE ET COUPLEUR ASSOCIÉ POUR RÉALISER UN DÉPORT D'UNE FONCTION ANTENNAIRE AINSI QUE DISPOSITIF COMMUNICANT CORRESPONDANT**
ANTENNE UND ZUGEHÖRIGER KOPPLER ZUR DURCHFÜHRUNG EINES VERSATZS EINER ANTENNENFUNKTION SOWIE ZUGEHÖRIGE KOMMUNIKATIONSVORRICHTUNG
ANTENNA AND ASSOCIATED COUPLER FOR REALIZING AN OFFSET OF AN ANTENNA FUNCTION AND CORRESPONDING COMMUNICATION DEVICE

(30) Priorité: 16.12.2022 FR 2213657
(43) Date de publication de la demande: 19.06.2024
(73) Titulaire: SAGEMCOM ENERGY & TELECOM SAS, 92270 Bois-Colombes (FR)
(72) Inventeur: KHOURI, Rami, 92500 Rueil Malmaison (FR); Martinez-Rodriguez, Oscar-Alberto, 92500 Rueil Malmaison (FR)
(74) Mandataire: Regimbeau

(56) Documents cités:
- DE-B3- 102012 112 266
- US-A1- 2002 154 066
- US-A1- 2004 212 545
- US-A1- 2013 050 036
- US-A1- 2020 053 436

## Description

### DOMAINE TECHNIQUE

La présente invention concerne une antenne et un coupleur associé permettant de déporter, de manière passive, une fonction antennaire. Elle concerne également un dispositif communicant comprenant une telle antenne pouvant fonctionner avec un tel coupleur.

### ETAT DE LA TECHNIQUE

Un dispositif radio comprend habituellement une antenne interne (souvent parfaitement intégrée au dispositif) et une connexion vers une antenne externe pour permettre de commuter d'une antenne à l'autre en fonction des conditions d'utilisation, par exemple quand les conditions de réception par l'antenne radio sont mauvaises.

Pour ce faire, un tel dispositif comprend deux voies radios séparées, chaque voie étant reliée soit à l'antenne interne soit à la connexion vers l'antenne externe. Pour commuter d'une voie à l'autre, un commutateur radiofréquence ou mécanique est utilisé.

L'utilisation de ces types de commutateur n'est pas satisfaisante.

En effet, un commutateur radiofréquence nécessite un mécanisme de détection de la présence d'une connexion externe qui peut s'avérer couteuse, encombrante et nuisible pour les performances radio en rajoutant de l'atténuation. Le système de détection présente aussi une problématique de consommation (surtout important pour les dispositifs sous batterie).

Également, l'intégration d'un élément non linéaire supplémentaire comme c'est le cas du commutateur radiofréquence est une possible cause d'émissions ou de bruits indésirables.

L'utilisation d'un commutateur mécanique est volumineuse et couteuse et difficile à intégrer dans un circuit imprimé. Le principal inconvénient fonctionnel de cette solution est l'apparition d'un bagotement mécanique en cas de serrage défaillant de l'antenne ou du câble coaxial. De plus, le chemin radio doit obligatoirement passer par le commutateur ce qui entraine des atténuations supplémentaires dans les performances.

Par ailleurs, les systèmes de détection ne sont pas très fiables et génèrent souvent une fausse mesure, ce qui mène à la perte immédiate de la communication.

Le document DE102012112266B3 décrit un système pour déporter un signal depuis un terminal de communication avec une antenne déportée.

### EXPOSE DE L'INVENTION

L'invention propose de pallier au moins un des inconvénients évoqués ci-dessus. L'invention est telle que définie dans la revendication 1.

A cet effet, l'invention propose, selon un premier aspect une antenne d'un dispositif communicant, comprenant un substrat, un point d'alimentation de l'antenne et un premier point de mise à la masse destiné à être relié à un plan de masse ; un motif antennaire métallique imprimé sur une face du substrat, le motif antennaire formant une boucle ouverte depuis le point d'alimentation vers le premier point de mise à la masse, la boucle définissant en son centre une zone non métallique ; l'antenne étant adaptée pour fonctionner seule pour rayonner un signal radio ou en association avec un coupleur disposé en face et à distance de l'antenne de manière à récupérer le signal rayonné par l'antenne, le coupleur comprenant une zone métallique complémentaire à la zone non métallique en face.

L'invention, selon le premier aspect, est avantageusement complétée par les caractéristiques suivantes, prises seules ou en une quelconque de leur combinaison techniquement possible :
- le motif antennaire comprend depuis, le point d'alimentation, un premier motif monobloc métallique constitué de deux branches longitudinales à distance l'une de l'autre, une branche transversale reliant les deux branches longitudinales, une première branche longitudinale s'étendant depuis le point d'alimentation, une deuxième branche longitudinale s'étendant depuis la branche transversale parallèlement à la première branche, le motif antennaire comprenant un deuxième motif monobloc s'étendant depuis le premier point de mise à la masse et comprend une branche transversale parallèle et à distance de la branche transversale du premier motif monobloc, la branche transversale du deuxième motif monobloc se terminant à une distance proche de 1 à 3 mm de la deuxième branche longitudinale du premier motif sans le toucher.
- la zone non métallique est rectangulaire.
- l'antenne comprend un deuxième point de mise à la masse destiné à être relié à un plan de masse et comprend un troisième motif monobloc s'étendant depuis le deuxième point de mise à la masse.
- le premier motif, le deuxième motif et le troisième motif sont configurés pour fonctionner dans les bandes LTE 20 et 8.

L'invention concerne, selon un deuxième aspect, un coupleur d'un dispositif communicant comprenant un substrat rectangulaire comprenant un motif de couplage imprimé sur une face, le motif de couplage comprenant une zone métallique complémentaire à une zone non métallique d'une antenne destinée à être en face et distance du coupleur de manière à ce que le coupleur récupère le signal rayonné par l'antenne.

L'invention concerne, selon un troisième aspect un dispositif communicant comprenant un premier logement pour loger une antenne selon le premier aspect de l'invention et un deuxième logement pour loger un coupleur selon le deuxième aspect de l'invention, le premier logement et le deuxième logement étant configurés l'un par rapport à l'autre de manière ce que le l'antenne et le coupleur puissent être l'un en face de l'autre, la zone métallique du coupleur étant alors en face de la zone non métallique de l'antenne, le dispositif comprenant deux modes de fonctionnement : un premier mode de fonctionnement comprenant uniquement l'antenne pour rayonner un signal radio, un deuxième mode de fonctionnement comprenant l'antenne et le coupleur pour déporter un signal radio rayonné par l'antenne vers une antenne externe adaptée pour être connectée au coupleur.

L'invention, selon le troisième aspect est avantageusement complétée par les caractéristiques suivantes, prises seules ou en une quelconque de leur combinaison techniquement possible :
- le deuxième logement est adapté pour maintenir le coupleur en face et à une distance comprise entre 1 et 3mm de l'antenne.
- le coupleur comprend un connecteur connecté au motif de couplage, le connecteur étant adapté à être connecté à une antenne externe au moyen d'un câble.
- l'antenne est noyée dans un capot et dans lequel le logement pour le coupleur est une rainure formée dans le capot, le coupleur étant amovible.

Les avantages de l'invention sont multiples.

Le coupleur et l'antenne ne sont pas en contact de sorte qu'il n'est pas nécessaire d'ajouter d'éléments de connexion supplémentaires. Ceci est particulièrement avantageux lorsque le dispositif communicant est un compteur d'eau intelligent où l'étanchéité est recherchée pour être conforme à la protection IP67.

L'antenne interne se comporte donc comme une antenne classique lorsqu'elle est utilisée seule et permet le déport du signal en le transmettant au coupleur lorsque celui-ci est positionné en face de l'antenne ceci sans avoir à changer de chemin radio. La présence d'un coupleur à proximité de l'antenne force cette dernière à fonctionner comme un coupleur. Ainsi, le signal utile n'est plus rayonné directement par l'antenne mais transmis à une antenne externe déportée par l'intermédiaire du coupleur adjacent.

Le coupleur et l'antenne ne sont pas en contact direct ce qui permet une isolation électrique entre les deux (utile dans le cas des compteurs électrique). Par ailleurs, le passage d'un mode de fonctionnement à l'autre ne nécessite aucune action électronique ou logiciel : la présence du coupleur permet de passer du mode de rayonnement antenne interne au mode couplage vers antenne externe.

### PRESENTATION DES FIGURES

D'autres caractéristiques, buts et avantages de l'invention ressortiront de la description qui suit, qui est purement illustrative et non limitative, et qui doit être lue en regard des dessins annexés sur lesquels :
- la figure 1a, la figure 1b, la figure1c, la figure 1d et la figure 1e illustrent plusieurs vues d'un dispositif communicant conforme à l'invention ;
- la figure 2 illustre une antenne conforme à l'invention ;
- la figure 3 illustre un coupleur conforme à l'invention ;
- la figure 4 illustre une vue de côté du dispositif communicant conforme à l'invention comprenant à la fois une antenne et un coupleur en face.

Sur l'ensemble des figures les éléments similaires portent des références identiques.

### DESCRIPTION DETAILLEE

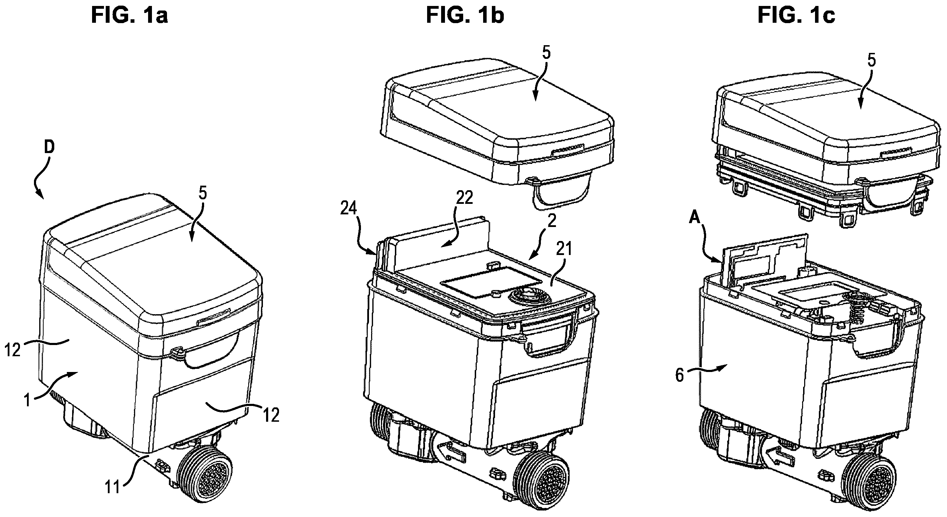

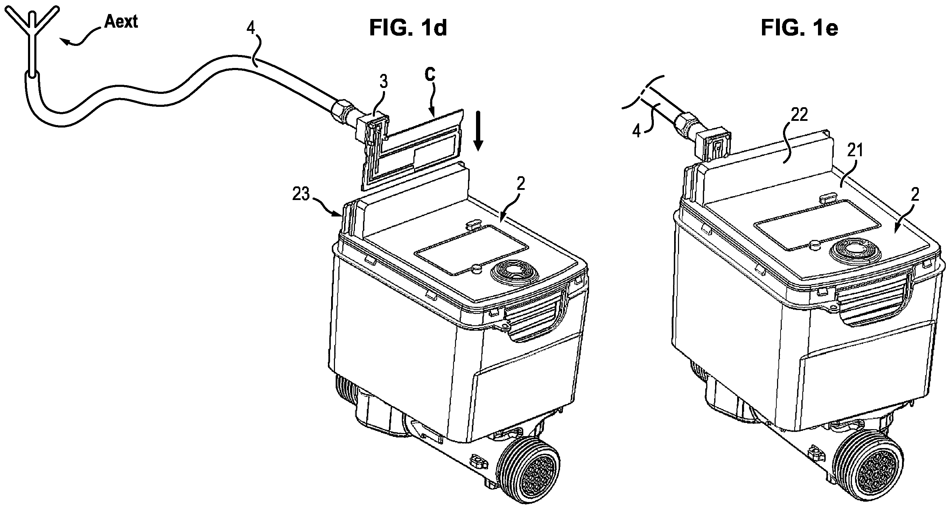

Les **figures 1a, 1b, 1c****,** **1d, 1e** illustrent plusieurs vues d'un dispositif D communicant comprenant une enceinte 1 logeant une carte 6 électronique ainsi que des composants électroniques (non visibles). L'enceinte 1 comporte un fond 11 et quatre parois 12 (deux sont visibles sur les figures) s'élevant depuis le fond 11. L'enceinte 1 définie un volume qui loge l'électronique. Une antenne A dite antenne interne est connectée à la carte 6 électronique et permet au dispositif D communicant d'émettre et recevoir des signaux. Comme on le verra par la suite, l'antenne A interne se présente sous la forme d'une plaque de forme générale rectangulaire. La carte 6 électronique assure tous les traitements radios nécessaires à la communication.

Un tel dispositif D communicant est par exemple un compteur d'eau pour lequel des relevées périodiques doivent être effectués à distance. De manière plus générale, on note que l'invention s'applique à tous dispositifs communicants.

Pour favoriser la communication, l'antenne A interne fait saillie de l'enceinte 1 et est protégée par un capot 2 comprenant un logement pour l'antenne A interne et qui obture l'enceinte 1. Le capot 2 comporte une paroi principale 21 qui permet de fermer l'enceinte 1 en étant parallèle au fond 11 et une paroi 22 secondaire en saillie de la paroi 21 principale dans laquelle est logée à l'intérieur l'antenne A interne. Ainsi la paroi 22 secondaire présente une épaisseur suffisante pour loger l'antenne 1 interne.

Comme illustré sur les figures 1b, 1d et 1d, le dispositif communicant avec le capot 2 et l'enceinte 1 assemblés ne permet pas de voir l'antenne A interne.

De manière complémentaire un couvercle 5 se clipse sur le capot 2 pour protéger le tout comme illustré sur la figure 1a.

L'enceinte 1, le capot 2, le couvercle 5 sont de préférence en plastique. En fonction de l'application, l'enceinte est remplie d'un gel protecteur étanche pour protéger l'électronique qui y est logée. En effet, le dispositif communicant peut être utilisé comme compteur d'eau intelligent et doit être étanche.

Le capot 2 comporte en face et à distance de la paroi 22 secondaire, une paroi 23 auxiliaire. La paroi 22 secondaire et la paroi 23 auxiliaire définissent ensemble une rainure 24 qui permet de recevoir un coupleur C qui se présente sous la forme d'une plaque de forme générale rectangulaire. Un tel coupleur C est amovible et se place dans la rainure 24 en face de l'antenne A interne. La rainure 24 comprend également des éléments de maintien du coupleur C en face de l'antenne A interne. Le coupleur C est muni, par exemple d'un connecteur 3 coaxial auquel un câble 4 coaxial peut être connecté. A l'extrémité du câble est coaxial est connectée une antenne externe Aext. Pour connecter le coupleur à l'antenne externe Aext il convient de prévoir un connecteur adapté 50 Ohms.

Le rainure 24 et la paroi secondaire 22 présentes des dimensions qui permettent de positionner le coupleur C à une distance de l'antenne A comprise entre 1 et 5 mm, de préférence 2 mm. En d'autres termes, il s'agit de positionner le coupleur C le plus proche possible de l'antenne A pour favoriser le couplage C du signal rayonné par l'antenne A.

La rainure 24 est en outre conformée pour permettre de positionner précisément le coupleur C en face de l'antenne A pour que le couplage soit optimal avec le moins de perte possible.

En outre, le coupleur C est un composant passif qui n'est pas en contact électrique avec l'antenne A ce qui permet d'éviter de compromettre le dispositif D communicant. En effet, pour positionner le coupleur C il s'agit simplement de le placer dans la fente 24 prévue à cet effet. Il n'est donc pas nécessaire de le démonter ou d'entrer en contact avec l'électronique à l'intérieur. L'indice de protection, noté IP n'est donc par altéré.

Un tel dispositif communicant présente deux modes de fonctionnement.

Un premier mode comprenant uniquement l'antenne A qui permet de rayonner un signal radio (voir les figures 1b et 1c) ou de recevoir un signal radio.

Un deuxième mode comprenant l'antenne A et le coupleur C de manière à déporter le signal rayonné par l'antenne A vers l'antenne externe (voir les figures 1d et 1e). L'émission/réception du signal radio se faisant par l'antenne externe Aext.

De cette manière il est possible de positionner le dispositif communicant n'importe où, l'émission/réception se faisant à distance du dispositif communicant.

Le passage d'un mode à l'autre ne nécessite aucune action logicielle ni la présence d'un commutateur. Il s'agit seulement de positionner le coupleur C dans la rainure 24 prévue à cet effet.

De manière avantageuse, le dispositif communicant est tel qu'il fonctionne de préférence dans les bandes LTE 20 et 8 (c'est-à-dire dans les bandes de 800 MHz et 900 MHz). Ces bandes sont notamment utilisés dans le domaine des compteurs intelligent par exemple pour des compteurs d'eau. De manière alternative, c'est la définition du coupleur C et de l'antenne A interne qui permet de régler les bandes de fonctionnement.

### Antenne A

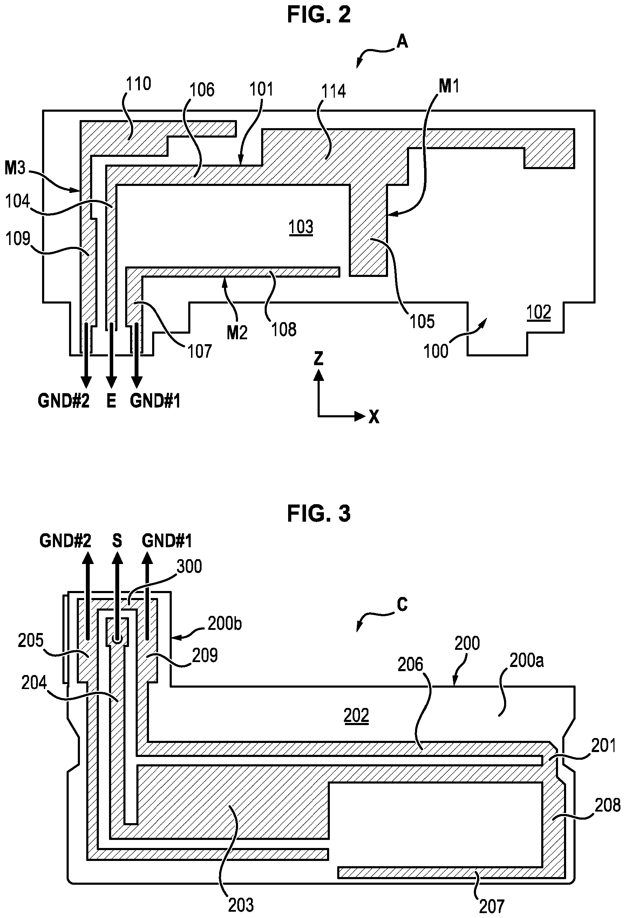

La **figure 2** illustre en détail un mode de réalisation de l'antenne A adaptée à être intégré au dispositif D communicant précédemment décrit.

L'antenne A est une antenne imprimée comprenant un substrat 100 en matériau diélectrique comprenant un point E d'alimentation de l'antenne A et un premier point GND#1 de mise à la masse relié à un plan de masse (non représenté) de l'antenne A. Le point E d'alimentation est le point d'entrée du signal radio que l'antenne A doit rayonner (dans le sens d'émission). Le substrat 100 est de forme générale rectangulaire et s'étend selon un direction transversale X et longitudinale Z.

Sur une face 102 du substrat 100 est imprimé un motif 101 antennaire métallique. Le motif 101 antennaire métallique est par exemple du cuivre et est imprimé selon des techniques bien connues de l'homme du métier.

Le motif 101 antennaire métallique forme une boucle ouverte depuis le point E d'alimentation vers le premier point GND#1 de mise à la masse, la boucle définissant en son centre une zone 103 non métallique. Le fait que le motif 101 antennaire forme une boucle ouverte (en fait presque fermée) permet le rayonnement du signal radio. En outre, le motif 101 étant une boucle presque fermée permet à l'antenne de se coupler au coupleur C en face.

La zone 102 non métallique est de préférence rectangulaire. D'autres formes sont envisageables.

L'antenne A est adaptée pour fonctionner, en émission, seule pour rayonner un signal radio ou en association avec un coupleur C disposé en face et à distance de l'antenne A de manière à récupérer le signal rayonné par l'antenne A, le coupleur C comprenant, à ce titre, une zone 203 métallique complémentaire à la zone 103 non métallique en face.

Le motif 101 antennaire présente une forme qui est adaptée à l'application envisagée en termes de fréquences d'utilisation.

Selon le mode de réalisation illustré sur la figure 2, le motif 101 antennaire comprend depuis, le point E d'alimentation un premier motif M1 monobloc métallique constitué de deux branches 104, 105 longitudinales à distance l'une de l'autre, une branche 106 transversale reliant les deux branches 104, 105 longitudinales, une première branche 104 longitudinale s'étendant depuis le point E d'alimentation, une deuxième branche 105 longitudinale s'étendant depuis la branche 106 transversale parallèlement à la première branche 104. Ce premier motif M1 est principalement en forme de U. Les différentes branches qui constituent le premier motif M1 présentent des épaisseurs variées.

Une quatrième branche 114 est ici présente dans le prolongement de la branche transversale 106 du U.

Un deuxième motif M2 métallique monobloc s'étend depuis le premier point GND#1 de mise à la masse connecté à un plan de masse. Il comprend une branche 107 longitudinale qui s'étend depuis le premier point GND#1 suivie d'une branche 108 transversale parallèle et à distance de la branche 105 transversale du premier motif monobloc M1, la branche 107 transversale du deuxième motif (M2) monobloc se terminant à une distance proche de 1 à 3 mm de la deuxième branche 105 longitudinale du premier motif M1 sans le toucher. En d'autres termes, le deuxième motif M2 permet de former avec le premier motif M1 la boucle ouverte et sont adaptés en fonction du rayonnement souhaité pour l'antenne A.

Un troisième motif M3 métallique s'étend depuis un deuxième point GND#2 de mise à la masse de l'antenne A et permet de régler l'adaptation de l'antenne A : une branche longitudinale 109 s'étend depuis le deuxième point GND#2 de mise à la masse suivie d'une branche 110 transversale qui est parallèle la branche 106 transversale du premier motif M1.

### Coupleur

La **figure 3** illustre en détail un mode de réalisation d'un coupleur C adapté à être intégré au dispositif D communicant précédemment décrit.

Le coupleur C comprend un substrat 200 en matériau diélectrique et comprenant un motif 201 de couplage imprimé sur une face 202, le motif 201 de couplage. Le motif 201 de couplage comprend une zone 203 métallique complémentaire à la zone 103 non métallique de l'antenne A destinée à être en face et distance du coupleur C de manière à ce que le coupleur C récupère le signal rayonné par l'antenne A. La zone 203 métallique est prolongée d'une branche longitudinale qui est reliée par un connecteur 300 à une sortie S du coupleur C. Le connecteur 300 est adapté 50 Ohm.

Le substrat 200 présente une partie 200a rectangulaire depuis laquelle s'étend une patte 200b qui permet de connecter un connecteur 3 coaxial au coupleur C et notamment à la sortie S du coupleur C. Le connecteur 3 est placée sur une face opposée à celle sur laquelle est imprimée le motif 201 de couplage. Le connecteur 3 est lui connecté à un câble coaxial connecté à l'antenne Aext externe.

Le motif 201 de couplage présente donc majoritairement une zone 203 métallique rectangulaire depuis laquelle s'étendent des branches 204, 205, 206, 207, 208, 209 qui permettent de régler l'adaptation du coupleur C et d'assurer les connexions du coupleur C au connecteur 3. La zone métallique 203 est donc entourée d'une boucle. Des branches longitudinales 205, 209 sont imprimées sur le substrat pour être en face des branches 107, 109 de l'antenne A qui sont reliées aux points de mise à la masse GND#1, GND#2. Les branches 205, 209 permettent aussi de capter le signal provenant de l'antenne A et améliorent ainsi le couplage.

La zone 202 métallique rectangulaire lorsqu'elle est en face de la zone non métallique de l'antenne A permet de récupérer le signal rayonné par l'antenne A et de l'amener vers le sortie S du coupleur (en émission).

La forme de la zone métallique est conditionnée par la zone métallique de l'antenne A qui doit être en face.

### Antenne et coupleur

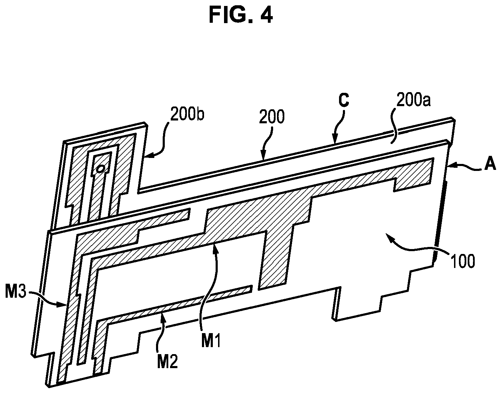

La **figure 4** illustre l'agencement de l'antenne A et du coupleur C. Lorsque le coupleur C est positionné en face de l'antenne A, les points de mise à la masse de l'antenne sont en face des points de mise à la masse du coupleur C qui sont ceux du connecteur coaxial. Également, la branche 104 du premier motif M1 connecté au point d'entrée de l'antenne A est en face de la branche 204 connectant la zone 203 métallique du coupleur C au point de sortie S du coupleur C. En outre, les parties imprimées sont bien entendu l'une en face de l'autre.

Ainsi, le chemin radio est identique que l'antenne A soit seule ou avec le coupleur C.

### Application

Le dispositif ci-dessus décrit s'utilise avantageusement comme un compteur d'eau intelligent et notamment lorsque la localisation du compteur ne permet pas une bonne liaison radio (compteur en sous-sol par exemple). Dans ce cas, il est primordial de pouvoir déporter la fonction radio vers une antenne externe judicieusement localisée de manière à recevoir le signal radio.

En outre, un dispositif conforme à l'invention a été réalisé et testé. En monde avec l'antenne A seule, la mesure du paramètre de réflexion S11 couvre bien les bandes attendues : LTE 20 et 8. Lorsque l'antenne A fonctionne avec le coupleur C les pertes en transmission mesurées S21 sont acceptables (environ 3dB).

## Revendications

1. Dispositif (D) communicant comprenant une antenne (A), un coupleur (C), un premier logement (22) pour loger l'antenne et un deuxième logement (24) pour loger le coupleur (C),
l'antenne (A) comprenant :
un substrat (100),
un point (E) d'alimentation de l'antenne et un premier point (GND#1) de mise à la masse destiné à être relié à un plan de masse ;
un motif (101) antennaire métallique imprimé sur une face (102) du substrat, le motif (101) antennaire formant une boucle ouverte depuis le point (E) d'alimentation vers le premier point (GND#1) de mise à la masse, la boucle définissant en son centre une zone (103) non métallique ;
l'antenne (A) étant adaptée pour fonctionner seule, selon un premier mode, pour rayonner un signal radio et un second mode en association avec le coupleur (C) disposé en face et à distance de l'antenne (A).
le coupleur (C) comprenant un substrat (200) rectangulaire comprenant un motif (201) de couplage imprimé sur une face, le motif (201) de couplage comprenant une zone (203) métallique complémentaire à la zone (103) non métallique de l'antenne (A) destinée à être en face et distance du coupleur (C) de manière à ce que le coupleur (C) récupère le signal rayonné par l'antenne (A),
le premier logement et le deuxième logement étant configurés l'un par rapport à l'autre de manière ce que le l'antenne et le coupleur puissent être l'un en face de l'autre, la zone (203) métallique du coupleur étant alors en face de la zone (103) non métallique de l'antenne (A), le dispositif comprenant deux modes de fonctionnement :
un premier mode de fonctionnement comprenant uniquement l'antenne (A) pour rayonner le signal radio,
un deuxième mode de fonctionnement comprenant l'antenne (A) et le coupleur (C) de manière à récupérer le signal rayonné par l'antenne (A) pour déporter le signal radio rayonné par l'antenne (A) vers une antenne externe adaptée pour être connectée au coupleur (C).

2. Dispositif selon la revendication 1, dans lequel le motif (101) antennaire comprend depuis, le point (E) d'alimentation, un premier motif (M1) monobloc métallique constitué de deux branches (104, 105) longitudinales à distance l'une de l'autre, une branche (106) transversale reliant les deux branches (104, 105) longitudinales, une première branche (104) longitudinale s'étendant depuis le point (E) d'alimentation, une deuxième branche (105) longitudinale s'étendant depuis la branche (106) transversale parallèlement à la première branche (104), le motif (101) antennaire comprenant un deuxième motif monobloc (M2) s'étendant depuis le premier point (GND#1) de mise à la masse et comprend une branche (107) transversale parallèle et à distance de la branche (105) transversale du premier motif monobloc (M1), la branche (107) transversale du deuxième motif (M2) monobloc se terminant à une distance proche de 1 à 3 mm de la deuxième branche (105) longitudinale du premier motif (M1) sans le toucher.

3. Dispositif selon la revendication 2, dans lequel l'antenne comprend un deuxième point (GND#2) de mise à la masse destiné à être relié à un plan de masse et comprend un troisième motif (M3) monobloc s'étendant depuis le deuxième point (GND#2) de mise à la masse.

4. Dispositif selon la revendication 3, dans lequel le premier motif (M1), le deuxième motif (M2) et le troisième motif (M3) de l'antenne sont configurés pour fonctionner dans les bandes LTE 20 et 8.

5. Dispositif selon l'une quelconque des revendications 1 à 4, dans laquelle la zone (103) non métallique de l'antenne est rectangulaire.

6. Dispositif selon la revendication 5, dans lequel le deuxième logement est adapté pour maintenir le coupleur (C) en face et à une distance comprise entre 1 et 3mm de l'antenne (A).

7. Dispositif selon l'une des revendications 1 à 6, dans lequel le coupleur (C) comprend un connecteur (3) connecté au motif de couplage (201), le connecteur (3) étant adapté à être connecté à une antenne externe (Aext) au moyen d'un câble (4).

8. Dispositif selon l'une des revendications 1 à 7, dans lequel l'antenne (A) est noyée dans un capot et dans lequel le logement pour le coupleur est une rainure (24) formée dans le capot, le coupleur étant amovible.

## Patentansprüche

1. Kommunikationsvorrichtung (D), umfassend eine Antenne (A), einen Koppler (C), eine erste Aufnahme (22) zur Aufnahme der Antenne und eine zweite Aufnahme (24) zur Aufnahme des Kopplers (C),
wobei die Antenne (A) umfasst:
ein Substrat (100),
einen Versorgungspunkt (E) der Antenne und einen ersten Erdungspunkt (GND#1), der bestimmt ist, mit einer Erdungsebene verbunden zu sein;
ein auf eine Seite (102) des Substrats gedrucktes metallisches Antennenmuster (101), wobei das Antennenmuster (101) eine offene Schleife vom Versorgungspunkt (E) zum ersten Erdungspunkt (GND#1) bildet, wobei die Schleife in ihrer Mitte einen nichtmetallischen Bereich (103) definiert;
wobei die Antenne (A) geeignet ist, allein zu funktionieren, gemäß einem ersten Modus, um ein Funksignal abzustrahlen, und einem zweiten Modus in Verbindung mit dem gegenüber und entfernt von der Antenne (A) angeordneten Koppler (C),
wobei der Koppler (C) ein rechteckiges Substrat (200) umfasst, das ein auf eine Seite gedrucktes Kopplungsmuster (201) umfasst, wobei das Kopplungsmuster (201) einen metallischen Bereich (203) umfasst, der zu dem nichtmetallischen Bereich (103) der Antenne (A) komplementär ist, der bestimmt ist, gegenüber und entfernt vom Koppler (C) zu sein, so dass der Koppler (C) das von der Antenne (A) abgestrahlte Signal aufnimmt, wobei die erste Aufnahme und die zweite Aufnahme derart im Verhältnis zueinander ausgelegt sind, dass die Antenne und der Koppler einander gegenüberliegen können, wobei sich der metallische Bereich (203) des Kopplers dann gegenüber dem nichtmetallischen Bereich (103) der Antenne (A) befindet, wobei die Vorrichtung zwei Betriebsmodi umfasst:
einen ersten Betriebsmodus, der nur die Antenne (A) zum Abstrahlen des Funksignals umfasst,
einen zweiten Betriebsmodus, der die Antenne (A) und den Koppler (C) derart umfasst, dass das von der Antenne (A) abgestrahlte Signal aufgenommen wird, um das von der Antenne (A) abgestrahlte Funksignal zu einer externen Antenne abzuleiten, die geeignet ist, am Koppler (C) angeschlossen zu sein.

2. Vorrichtung nach Anspruch 1, wobei das Antennenmuster (101) ab dem Versorgungspunkt (E) ein einteiliges Metallmuster (M1) umfasst, das aus zwei länglichen Schenkeln (104, 105) besteht, die voneinander beabstandet sind, wobei ein transversaler Schenkel (106) die beiden länglichen Schenkel (104, 105) verbindet, wobei sich ein erster länglicher Schenkel (104) ab dem Versorgungspunkt (E) erstreckt, sich ein zweiter länglicher Schenkel (105) ab dem transversalen Schenkel (106) parallel zum ersten Schenkel (104) erstreckt, wobei das Antennenmuster (101) ein zweites einteiliges Muster (M2) umfasst, das sich ab dem ersten Erdungspunkt (GND#1) erstreckt und einen transversalen Schenkel (107) umfasst, der parallel und vom transversalen Schenkel (105) des ersten einteiligen Musters (M1) entfernt ist, wobei der transversale Schenkel (107) des zweiten einteiligen Musters (M2) in einem nahen Abstand von 1 bis 3 mm vom zweiten länglichen Schenkel (105) des ersten Musters (M1) endet, ohne es zu berühren.

3. Vorrichtung nach Anspruch 2, wobei die Antenne einen zweiten Erdungspunkt (GND#2) umfasst, der bestimmt ist, mit einer Erdungsebene verbunden zu sein, und ein drittes einteiliges Muster (M3) umfasst, das sich ab dem zweiten Erdungspunkt (GND#2) erstreckt.

4. Vorrichtung nach Anspruch 3, wobei das erste Muster (M1), das zweite Muster (M2) und das dritte Muster (M3) der Antenne für den Betrieb in den LTE-Bändern 20 und 8 ausgelegt sind.

5. Vorrichtung nach einem der Ansprüche 1 bis 4, wobei der nichtmetallische Bereich (103) der Antenne rechteckig ist.

6. Vorrichtung nach Anspruch 5, wobei die zweite Aufnahme geeignet ist, den Koppler (C) gegenüber und in einem Abstand zwischen 1 und 3 mm von der Antenne (A) zu halten.

7. Vorrichtung nach einem der Ansprüche 1 bis 6, wobei der Koppler (C) einen mit dem Kopplungsmuster (201) verbundenen Verbinder (3) umfasst, wobei der Verbinder (3) geeignet ist, mittels eines Kabels (4) mit einer externen Antenne (Aext) verbunden zu sein.

8. Vorrichtung nach einem der Ansprüche 1 bis 7, wobei die Antenne (A) in einer Abdeckung versenkt ist und wobei die Aufnahme für den Koppler eine in der Abdeckung ausgebildete Nut (24) ist, wobei der Koppler lösbar ist.

## Claims

1. A communicating device (30) comprising an antenna (A), a coupler (C) a first housing (22) for housing the antenna and a second housing (24) for housing the coupler (C),
the antenna (A) comprising:
a substrate (100),
a feed point (E) of the antenna and a first grounding point (GND#1) intended to be connected to a ground plane;
a metallic antenna element pattern (101) printed on one side (102) of the substrate, the antenna element pattern (101) forming an open loop from the feed point (E) to the first grounding point (GND#1), the loop defining in its center a non-metallic area (103);
the antenna (A) being suitable for operating alone, in a first mode, to radiate a radio signal and a second mode in association with the coupler (C) disposed facing and at a distance from the antenna (A),
the coupler (C) comprising a rectangular substrate (200) comprising a coupling pattern (201) printed on one side, the coupling pattern (201) comprising a metallic area (203) complementary to the non-metallic area (103) of the antenna (A) intended to be facing and distant from the coupler (C) in such a way that the coupler (C) picks up the signal radiated by the antenna (A),
the first housing and the second housing being configured with respect to one another in such a way that the antenna and the coupler can face one another, the metallic area (203) of the coupler then facing the non-metallic area (103) of the antenna (A), the device comprising two operating modes:
a first operating mode comprising the antenna (1) alone for radiating a radio signal,
a second operating mode comprising the antenna (A) and the coupler (C) in such a way as to pick up the signal radiated by the antenna (A) for transferring a radio signal radiated by the antenna (A) to an external antenna suitable for being connected to the coupler (C).

2. The device as claimed in claim 1, wherein the antenna element pattern (101) comprises, from the feed point (E), a first metallic integral pattern (M1) composed of two longitudinal branches (104, 105) distant from one another, a transverse branch (106) connecting the two longitudinal branches (104, 105), a first longitudinal branch (104) extending from the feed point (E), a second longitudinal branch (105) extending from the transverse branch (106) parallel to the first branch (104), the antenna element pattern (101) comprising a second integral pattern (M2) extending from the first grounding point (GND#1) and comprises a transverse branch (107) parallel to and distant from the transverse branch (105) of the first integral pattern (M1), the transverse branch (107) of the second integral pattern (M2) ending at a distance in the vicinity of 1 to 3 mm from the second longitudinal branch (105) of the first pattern (M1) without touching it.

3. The device as claimed in claim 2, wherein the antenna comprises a second grounding point (GND#2) intended to be connected to a ground plane and comprises a third integral pattern (M3) extending from the second grounding point (GND#2).

4. The device as claimed in claim 3, wherein the first pattern (M1), the second pattern (M2) and the third pattern (M3) of the antenna are configured to operate in the bands LTE 20 and 8.

5. The device as claimed in any of claims 1 to 4, wherein the non-metallic area (103) of the antenna is rectangular.

6. The device as claimed in claim 5, wherein the second housing is suitable for retaining the coupler (C) facing and between 1 and 3mm distant from the antenna (A).

7. The device as claimed in one of claims 1 to 6, wherein the coupler (C) comprises a connector (3) connected to the coupling pattern (201), the connector (3) being suitable for being connected to an external antenna (Aext) by means of a cable (4).

8. The device as claimed in one of claims 1 to 7, wherein the antenna (A) is embedded in a cover and in which the housing for the coupler is a groove (24) formed in the cover, the coupler being removable.
